Europäisches Patentamt

European Patent Office

Office européen des brevets

(11) Veröffentlichungsnummer: **0 255 657 B1**

# EUROPÄISCHE PATENTSCHRIFT

(45) Veröffentlichungstag der Patentschrift: **28.08.91**

(51) Int. Cl.5: **H01B 3/44**, C08K 3/36

(21) Anmeldenummer: **87110610.0**

(22) Anmeldetag: **22.07.87**

(54) **Elektrische Isolierung.**

(30) Priorität: **04.08.86 DE 3626408**

(43) Veröffentlichungstag der Anmeldung:
**10.02.88 Patentblatt 88/06**

(45) Bekanntmachung des Hinweises auf die
Patenterteilung:
**28.08.91 Patentblatt 91/35**

(84) Benannte Vertragsstaaten:
**BE DE**

(56) Entgegenhaltungen:
**EP-A- 0 127 052**
**EP-A- 0 127 054**
**DE-A- 3 323 844**

(73) Patentinhaber: **Siemens Aktiengesellschaft**
**Wittelsbacherplatz 2**
**W-8000 München 2(DE)**

(72) Erfinder: **Henkel, Hans-Joachim, Dr.**
**Philipp Reis-Str. 34**
**W-8520 Erlangen(DE)**
Erfinder: **Müller, Norbert, Dr.**
**Von Hauck-Str. 15b**
**W-8522 Herzogenaurach(DE)**

## Beschreibung

Die Erfindung betrifft eine elektrische Isolierung auf Polyolefinbasis, insbesondere bei Kabeln und Leitungen, für Mittel- und Hochspannung ab ca. 10 kV mit einem Zusatz von 0,05 bis 10 Gew.-% Kieselsäure (mit einer Partikelgröße bis zu 50 μm bzw. einer Agglomeratgröße bis zu 100 μm) zum Retardieren von Wasserbäumchen.

In elektrisch beanspruchten Polyolefinisolierungen können Vorgänge ablaufen, die als "electrochemical treeing" (ECT) oder "water treeing" bezeichnet werden. Diese Vorgänge, die insbesondere im Hinblick auf die Betriebssicherheit kunststoffisolierter Mittel- und Hochspannungskabel von Bedeutung sind, führen zur Entstehung von bäumchenartigen Gebilden, den sogenannten ECT-Strukturen.

Das optische Erscheinungsbild von ECT-Strukturen, die nach geeigneter Anfärbung besonders kontrastreich und detailliert sichtbar sind, ist sehr vielfältig. Grundsätzlich unterscheidet man zwischen zwei Formen:
- "vented trees", die von der Oberfläche der Isolierung ausgehen und sich in die Isolierung hinein erstrecken, und
- "bow-tie trees", die im Inneren der Isolierung entstehen.

Der Mechanismus der ECT-Bildung ist bislang nicht geklärt. Allgemein wird aber angenommen, daß für die Bildung der ECT-Strukturen ein elektrisches Feld und die Anwesenheit einer polaren Flüssigkeit, insbesondere von Wasser, erforderlich ist; die ECT-Strukturen werden deshalb auch als Wasserbäumchen bezeichnet. Die Initiierungsorte der Wasserbäumchen scheinen immer Störstellen zu sein, wie Verunreinigungen, aggregierte Beimischungen, Hohlräume, Spalte, Risse oder Grenzflächen, von denen jedoch jeweils nur ein Teil zur Bildung von Wasserbäumchen führt. Von den Störstellen aus, die bei im großtechnischen Maßstab hergestellten Isolierungen nicht vollständig vermieden werden können, erstrecken sich die bäumchenartigen Strukturen in Richtung des elektrischen Feldes.

Da ECT-Strukturen lokale Veränderungen des Isoliermaterials darstellen, können sie eine Schädigung der Isolierung bewirken, insbesondere im Hinblick auf die elektrische Durchschlagsfestigkeit. Es sind deshalb bereits zahlreiche Versuche unternommen worden, um das Wachstum von Wasserbäumchen zu verhindern oder zumindest zu verzögern. Insbesondere werden dazu der Isolierschicht Additive zugegeben.

Geeignete Zusätze, mit denen die ECT-Bildung, d.h. die Bildung von Wasserbäumchen, wirksam und dauerhaft unterbunden werden kann, sind insbesondere:
- Barbitursäure und 2-Thiobarbitursäure sowie Derivate davon (DE-A- 32 02 828 bzw. US-A- 4 458 044),
- wasserlösliche Alkali- und Erdalkaliphosphate sowie hydrolysierbare Phosphorsäureester (DE-A- 32 02 896 bzw. US-A- 4 581 290),
- Stoffe mit einer bestimmten Partikel- bzw. Agglomeratgröße, welche für Schwermetallionen adsorptionsaktiv sind oder diese im Ionenaustausch binden (DE-A- 33 18 988 bzw. US-A- 4 623 755 bzw. EP-A-127 052),
- Alkoholate von Magnesium, Calcium und Aluminium (DE-A- 33 21 268 bzw. US-A- 4 574 111),
- Kalium- und Natriumstannat sowie Titanoxisulfat (DE-A- 35 03 998), und
- Derivate des Pyrimidins und Hexahydropyrimidins (DE-A- 35 16 971).

Aus der vorstehend bereits genannten EP-A-127 052 bzw. der DE-A- 33 18 988 bzw. der US-A- 4 623 755 ist es bekannt, in elektrischen Isolierungen auf Polyolefinbasis als Zusatz zum Retardieren von Wasserbäumchen in homogener Verteilung 0,05 bis 10 Gew.-% eines für Schwermetallionen adsorptionsaktiven oder Schwermetallionen im Ionenaustausch bindenden Stoffes mit einer Partikelgröße bis zu 50 μm bzw. einer Agglomeratgröße bis zu 100 μm einzusetzen. Als Zusätze können dabei Aluminiumoxide und -oxidhydrate mit großer aktiver Oberfläche und/oder Aluminiumsilicate verwendet werden, bevorzugt enthalten die elektrischen Isolierungen jedoch pyrogene und/oder gefällte Kieselsäure. Bei den Zusätzen handelt es sich vorzugsweise um synthetische Produkte, es können aber auch natürlich vorkommende Mineralien eingesetzt werden.

Zusätze der vorstehend genannten Art haben sich zwar als wirksam zum Retardieren von Wasserbäumchen erwiesen, elektrische Isolierungen, insbesondere Kabel- und Leitungsisolierungen, müssen aber für einen praktischen Einsatz eine Reihe weiterer wichtiger Eigenschaften aufweisen. Dazu zählen vor allem thermisch-oxidative Stabilität, ausreichende mechanische Stabilität, geringe dielektrische Verluste, optische Transparenz und Lagerstabilität als verarbeitungsfähiger Isoliercompound. Ein besonderes Augenmerk ist dabei auf die dielektrischen Verluste zu richten, da diese beim Vorhandensein von Zusatzstoffen in der Isolierung erhöht werden können.

Aufgabe der Erfindung ist es, eine elektrische Isolierung der eingangs genannten Art, welche einen Zusatz von Kieselsäure aufweist, in der Weise auszugestalten, daß sie den Anforderungen der Praxis in jeder Hinsicht genügt, wobei insbesondere eine ECT-retardierende Wirksamkeit und geringe dielektrische Verluste angestrebt werden.

Dies wird erfindungsgemäß dadurch erreicht, daß die Kieselsäure ein in folgender Weise hergestelltes Material ist:

- Schmelzen von SiO₂-haltigen mineralischen Stoffen mit Zuschlägen von Aluminiumoxid, Boroxid und Carbonaten und/oder Oxiden von Alkali- und Erdalkalimetallen zu einer homogenen Glasphase, wobei der SiO₂-Gehalt in der Glasschmelze zwischen 50 und 70 Gew.-% beträgt;
- Herstellen von Glaskörpern mit großer Oberfläche aus der Glasschmelze in Form von Glasfasern mit einem einheitlichen Durchmesser < 100 $\mu$m oder Körnern mit definierter Korngröße;
- Auslaugen der Glaskörper mit Mineralsäure zum Entfernen der Zuschläge und von Verunreinigungen; und
- Waschen und Trocknen sowie gegebenenfalls Mahlen der gebildeten porösen, amorphen und hochreinen SiO₂-Körper.

Eine derart hergestellte Kieselsäure (chemische Zusammensetzung: SiO₂) zeichnet sich dadurch aus, daß sie nicht kristallin, sondern röntgenamorph ist; darüber hinaus ist sie hochrein. Diese Kieselsäure wird in der erfindungsgemäßen elektrischen Isolierung in hochdisperser, d.h. feinteiliger Form eingesetzt, die erforderlichenfalls durch Mahlen grobkörnigerer SiO₂-Körper erhalten wird.

Kieselsäure der vorstehend genannten Art ist an sich bekannt (DE-A- 33 23 844). Sie dient als Füllstoff für Kunststoffe, die zur Umhüllung oder Abdeckung von integrierten Halbleiterschaltungen eingesetzt werden. Für diesen Zweck ist es aber wesentlich, daß der Füllstoff, d.h. die Kieselsäure, eine geringe $\alpha$-Aktivität aufweist. Dazu ist es erforderlich, eine Kieselsäure zu verwenden, die frei von Verunreinigungen, insbesondere von den für die $\alpha$-Emission verantwortlichen Elementen Thorium und Uran, ist.

Es war deshalb überraschend und konnte auch nicht vorhergesehen werden, daß elektrische Isolierungen mit einer derartigen Kieselsäure als Zusatz, wie sie die erfindungsgemäße elektrische Isolierung darstellt, nicht nur eine hervorragende ECT-retardierende Wirksamkeit besitzen, sondern auch geringe dielektrische Verluste aufweisen. Derartige elektrische Isolierungen sind deshalb für den praktischen Einsatz besonders geeignet.

Die in der erfindungsgemäßen elektrischen Isolierung Verwendung findende Kieselsäure wird aus SiO₂-haltigen mineralischen Ausgangsstoffen hergestellt; dazu dient insbesondere Quarzsand. Das Ausgangsmaterial wird dabei zusammen mit den Zuschlägen durch Schmelzen in eine homogene Glasphase übergeführt (Temperatur: ca. 1100 bis 1500 °C), wobei der SiO₂-Gehalt in der Glasschmelze auf einen Wert zwischen 50 und 70 Gew.-% eingestellt wird; als Zuschläge werden dabei - neben Aluminium- und Boroxid - vorzugsweise die Oxide bzw. Carbonate von Natrium, Kalium, Magnesium und/oder Calcium eingesetzt. Aus der Glasschmelze werden dann Glaskörper mit großer Oberfläche hergestellt. Dies kann entweder in der Weise geschehen, daß aus der Glasschmelze Glasfasern mit einem einheitlichen Durchmesser <100 $\mu$m gezogen werden, oder daß die erstarrte Glasschmelze zerkleinert und zu Körnern definierter Korngröße zermahlen wird. Die Glaskörper werden anschließend einem Auslaugprozeß in Mineralsäure unterworfen, wozu vorzugsweise mindestens 95 °C heiße Salzsäure (3n bis 6n) dient (Dauer: 4 bis 96 h). Dabei werden aus der Glasmatrix die Verunreinigungen und die Zuschläge herausgelöst, wodurch eine amorphe und hochreine Kieselsäure (SiO₂) entsteht. Diese Kieselsäure wird dann säurefrei gewaschen und getrocknet (Temperatur: ca. 150 °C) und erforderlichenfalls schließlich noch gemahlen, damit sie die gewünschte Partikelgröße aufweist.

Wie bereits ausgeführt, liegt bei der erfindungsgemäßen elektrischen Isolierung der Anteil an Kieselsäure bei 0,05 bis 10 Gew.-%, und zwar bezogen auf das Gesamtgewicht (der Isolierung), und die Partikelgröße der Kieselsäure beträgt bis zu 50 $\mu$m. Vorteilhaft beträgt der Anteil an Kieselsäure 0,1 bis 4 Gew.-%, vorzugsweise liegt er bei 0,5 bis 2 Gew.-%. Die Partikelgröße der Kieselsäure beträgt vorzugsweise bis zu 20 $\mu$m. Die Kieselsäure wird dem Isoliermaterial zugegeben. Bei Kabeln und Leitungen kann die Kieselsäure - neben der eigentlichen Isolierschicht - aber auch den feldbegrenzenden Schichten, d.h. der inneren und/oder äußeren Leitschicht, zugesetzt werden.

Außer in Kabeln und Leitungen kann die erfindungsgemäße elektrische Isolierung auch in Muffen und in Garnituren Verwendung finden. Als Grundlage dienen bei diesen Isoliermaterialien Polyolefine, und zwar vernetzte oder unvernetzte Materialien. Insbesondere finden in der erfindungsgemäßen Isolierung Polyethylen (PE) und vernetztes Polyethylen (VPE) Verwendung. Daneben können aber auch Ethylen-Copolymere, wie Ethylen-Propylen-Copolymere (EPR), Ethylen-Vinylacetat-Copolymere (EVA) und Ethylen-Alkylacrylat-Copolymere (beispielsweise Ethylen-Ethylacrylat- und -Butylacrylat-Copolymere), bzw. Ethylen-Propylen-Dien-Terpolymere und Gemische (Blends) dieser Ethylen-Copolymere und -Terpolymere mit Polyolefinen, insbesondere Polyethylen und Polypropylen, eingesetzt werden. Die genannten Polymeren bzw. Polymergemische können, wie bereits erwähnt, sowohl vernetzt als auch unvernetzt zum Einsatz gelangen. Die Vernetzung erfolgt dabei vorzugsweise peroxidisch oder durch energiereiche Strahlen. Den Isoliermaterialien können auch übliche Additive, wie Oxidationsstabilisatoren, zugesetzt werden.

Vorzugsweise ist bei der erfindungsgemäßen elektrischen Isolierung das Polyolefin Polyethylen oder ein Ethylen-Copolymeres mit polarer Cokomponente bzw. ein Polymerblend aus Polyethylen und dem Ethylen-Copolymeren, wobei der Anteil der polaren Cokomponente im Copolymeren bzw. im Polymerblend 1 bis 5 Gew.-% beträgt; siehe dazu die gleichzeitig eingereichte europäische Patentanmeldung Nr. 87110609.2 - "Elektrische Isolierung" (siehe : EP-A-025 6340). Die polare Cokomponente des Ethylen-Copolymeren ist dabei vorzugsweise ein Alkylacrylat, insbesondere Butylacrylat, d.h. als Copolymeres dient ein Ethylen-Butylacrylat-Copolymeres (EBA). Daneben kommen aber auch Methyl- und Ethylacrylat in Betracht, sowie - als weitere polare Cokomponenten - Vinylacetat, Vinylalkohol, Acrylnitril und Alkylmaleinate.

Anhand von Ausführungsbeispielen soll die Erfindung noch näher erläutert werden.

Aus hochreinem Polyethylen niederer Dichte (LDPE), das 4.4'-Thiobis(6-tert.-butyl-3-methyl-phenol) als Oxidationsstabilisator und Dicumylperoxid als Vernetzungsagens enthielt, wurden 3 mm dicke Platten hergestellt. Die Herstellung erfolgte durch Verpressen unter Druck und bei erhöhter Temperatur, wobei eine Vernetzung des Isoliermaterials, d.h. des Polyethylens, stattfand. In einen Teil des Plattenmaterials wurde vor dem Verpressen pyrogene Kieselsäure mit hoher spezifischer Oberfläche (beispielsweise ca. 300 m²/g), die unter dem Namen Aerosil® im Handel erhältlich ist, eingemischt, in den anderen Teil eine - entsprechend der DE-A- 33 23 844 -nach dem sogenannten Auslaugverfahren hergestellte Kieselsäure, und zwar jeweils in einer Konzentration von 1 Gew.-%. Die plattenförmigen Prüflinge wurden dann mit 10 kV/50 Hz elektrisch belastet, wobei sich beide Oberflächen in direktem Kontakt mit einer auf 70°C erwärmten 3 %igen Natriumchloridlösung befanden. Die Belastungsdauer betrug 130 Stunden.

Die Versuchsergebnisse zeigen zunächst, daß sämtliche Plattenprüflinge nach der elektrischen Belastung keine ECT-Strukturen aufweisen, d.h. sowohl diejenigen, welche der erfindungsgemäßen elektrischen Isolierung entsprechen, als auch diejenigen entsprechend der elektrischen Isolierung nach der DE-A- 33 18 988. Wie bereits ausgeführt, ist neben der ECT-Retardierung aus elektrischen Gründen aber auch wichtig, daß die dielektrischen Verluste und damit auch der tan $\delta$ so gering wie möglich sind.

Die durchgeführten Untersuchungen ergaben im einzelnen folgendes:

| Isoliermaterial | ECT-Strukturen | tan $\delta$ |
|---|---|---|
| 100 % LDPE + 1 % Aerosil® | keine | $28.10^{-4}$ |
| 100 % LDPE + 1 % Kieselsäure (nach DE-AS 33 23 844) | keine | $10.10^{-4}$ |

Es zeigt sich zwar, daß die tan $\delta$-Werte aller Prüflinge unterhalb des Wertes von $40.10^{-4}$, der in IEC-Publication 502 (Ausgabe 1978) spezifiziert worden ist, liegen und somit die Normvorschrift erfüllen, ein Isoliermaterial mit einer nach dem Auslaugverfahren aus mineralischen Ausgangsstoffen hergestellten Kieselsäure ist jedoch anderen Kieselsäurearten, wie pyrogene Kieselsäure, vorzuziehen, weil es die niedrigeren dielektrischen Verluste aufweist.

Allgemein zeigt sich somit, daß die erfindungsgemäße elektrische Isolierung, die nach dem Auslaugverfahren hergestellte Kieselsäure enthält, sowohl niedrige dielektrische Verluste aufweist als auch die ECT-Bildung wirksam und dauerhaft unterdrückt.

**Patentansprüche**

1. Elektrische Isolierung auf Polyolefinbasis, insbesondere bei Kabeln und Leitungen, für Mittel- und Hochspannung ab ca. 10 kV mit einem Zusatz von 0,05 bis 10 Gew.-% Kieselsäure (mit einer Partikelgröße bis zu 50 μm bzw. einer Agglomeratgröße bis zu 100 Um) zum Retardieren von Wasserbäumchen, **dadurch gekennzeichnet,** daß die Kieselsäure ein in folgender Weise hergestelltes Material ist:

- Schmelzen von $SiO_2$-haltigen mineralischen Stoffen mit Zuschlägen von Aluminiumoxid, Boroxid und Carbonaten und/oder Oxiden von Alkali- und Erdalkalimetallen zu einer homogenen Glasphase, wobei der $SiO_2$-Gehalt in der Glasschmelze zwischen 50 und 70 Gew. -% beträgt;
- Herstellen von Glaskörpern mit großer Oberfläche aus der Glasschmelze in Form von Glasfasern mit einem einheitlichen Durchmesser < 100 $\mu$m oder Körnern mit definierter Korngröße;
- Auslaugen der Glaskörper mit Mineralsäure zum Entfernen der Zuschläge und von Verunreinigungen; und
- Waschen und Trocknen sowie gegebenenfalls Mahlen der gebildeten porösen, amorphen und hochreinen $SiO_2$-Körper.

2. Elektrische Isolierung nach Anspruch 1, **dadurch gekennzeichnet,** daß die Kieselsäure eine Partikelgröße bis zu 20 $\mu$m aufweist.

3. Elektrische Isolierung nach Anspruch 1 oder 2, **dadurch gekennzeichnet,** daß der Anteil der Kieselsäure 0,1 bis 4 Gew.-%, insbesondere 0,5 bis 2 Gew.-%, beträgt.

4. Elektrische Isolierung nach einem der Ansprüche 1 bis 3, **dadurch gekennzeichnet,** daß das Polyolefin Polyethylen ist.

5. Elektrische Isolierung nach einem der Ansprüche 1 bis 3, **dadurch gekennzeichnet,** daß das Polyolefin ein Ethylen-Copolymeres mit polarer Cokomponente oder ein Polymerblend aus Polyethylen und dem Ethylen-Copolymeren ist, wobei der Anteil der polaren Cokomponente im Copolymeren bzw. im Polymerblend 1 bis 5 Gew.-% beträgt.

6. Elektrische Isolierung nach Anspruch 5, **dadurch gekennzeichnet,** daß die polare Cokomponente des Ethylen-Copolymeren ein Alkylacrylat, insbesondere Butylacrylat, ist.

**Claims**

1. Polyolefin-based electrical insulation, in particular for cables and lines, for medium and high voltage from about 10 kV with an addition of 0.05 to 10 % by weight silicic acid (with a particle size up to 50 $\mu$m or an agglomerate size up to 100 $\mu$m) for retarding water trees, characterized in that the silicic acid is a material produced in the following manner:
   - melting mineral substances containing $SiO_2$ with additions of aluminium oxide, boric oxide and carbonates and/or oxides of alkali metals and alkaline earth metals into a homogeneous glass phase, whereby the $SiO_2$ content in the glass melt amounts to between 50 and 70 % by weight;
   - production of glass bodies with large surface from the glass melt in the form of glass fibres with a uniform diameter < 100 $\mu$m or grains with defined grain size;
   - leaching of the glass bodies with mineral acid to remove the additions and impurities; and
   - washing and drying as well as if necessary grinding the formed porous, amorphous and high-purity $SiO_2$ bodies.

2. Electrical insulation according to claim 1, characterized in that the silicic acid has a particle size of up to 20 $\mu$m.

3. Electrical insulation according to claim 1 or 2, characterized in that the fraction of the silicic acid amounts to 0.1 to 4 % by weight, in particular 0.5 to 2 % by weight.

4. Electrical insulation according to one of claims 1 to 3, characterized in that the polyolefin is polyethylene.

5. Electrical insulation according to one of claims 1 to 3, characterized in that the polyolefin is an ethene copolymer with a polar co-component or a polymer blend of polyethylene and the ethene copolymer, whereby the fraction of the polar co-component in the copolymer or in the polymer blend amounts to 1 to 5 % by weight.

6. Electrical insulation according to claim 5, characterized in that the polar co-component of the ethene copolymer is an alkyl acrylate, in particular butyl acrylate.

EP 0 255 657 B1

**Revendications**

1. Isolant électrique à base de polyoléfine, notamment pour des câbles et des conducteurs, pour la moyenne tension et la haute tension à partir de 10 kV environ, comprenant une addition de 0,05 à 10 % en poids d'acide silicique (ayant une dimension de particule allant jusqu'à 50 $\mu$m ou une dimension d'aggloméré allant jusqu'à 100 $\mu$m) pour retarder les arborescences d'eau, caractérisé en ce que l'acide silicique est une matière fabriquée de la manière suivante :
   - fusion de substances minérales contenant du $SiO_2$ avec des additions d'oxyde d'aluminium, d'oxyde de bore et de carbonates et/ou d'oxydes de métal alcalin et de métal alcalino-terreux en une phase vitreuse homogène, la teneur en SiO du verre fondu étant comprise entre 50 et 70 % en poids;
   - fabrication de corps en verre ayant une grande surface, à partir du verre fondu, sous forme de fibres de verre ayant un diamètre uniforme inférieur à 100 $\mu$m ou de grains d'une granulométrie définie ;
   - lixiviation des corps en verre par un acide minéral pour éliminer les additifs et les impuretés ; et
   - lavage et séchage ainsi que, le cas échéant, broyage des corps en $SiO_2$ poreux, amorphes et très purs ainsi formés.

2. Isolant électrique suivant la revendication 1, caractérisé en ce que l'acide silicique a une dimension de particule allant jusqu'à 20 $\mu$m.

3. Isolant électrique suivant la revendication 1 ou 2, caractérisé en ce que la proportion d'acide silicique est comprise entre 0,1 et 4 % en poids et, notamment, entre 0,5 et 2 % en poids.

4. Isolant électrique suivant l'une des revendications 1 à 3, caractérisé en ce que la polyoléfine est du polyéthylène.

5. Isolant électrique suivant l'une des revendications 1 à 3, caractérisé en ce que la polyoléfine est un copolymère d'éthylène et d'un co-constituant polaire, ou un mélange de polymères constitué de polyéthylène et du copolymère d'éthylène, la proportion du co-constituant polaire dans le copolymère ou dans le mélange de polymères étant comprise entre 1 et 5 % en poids.

6. Isolant électrique suivant la revendication 5, caractérisé en ce que le co-constituant polaire du copolymère d'éthylène est un acrylate d'alcoyle, notamment l'acrylate de butyle.